# EUROPÄISCHE PATENTSCHRIFT

(11) **EP 3 290 300 B1**
(45) Veröffentlichungstag und Bekanntmachung des Hinweises auf die Patenterteilung: **02.10.2019**
(21) Anmeldenummer: 17188091.7
(22) Anmeldetag: 28.08.2017
(51) Int. Cl.: B62D 13/02, B62D 13/04

(54) **MECHANISCHE LENKVORRICHTUNG ZUR ZWANGSLENKUNG VON NUTZFAHRZEUG-EINZELRADAUFHÄNGUNGEN AN SATTELAUFLIEGERN ABHÄNGIG VOM RELATIVGIERWINKEL ZWISCHEN ZUGFAHRZEUG UND NACHLAUFFAHRZEUG**
MECHANICAL STEERING DEVICE FOR FORCED STEERING OF COMMERCIAL VEHICLE WHEEL SUSPENSION ON SEMITRAILERS DEPENDING ON THE RELATIVE ANGLE BETWEEN A TOWING VEHICLE AND FOLLOWING VEHICLE
DISPOSITIF DE DIRECTION MÉCANIQUE PERMETTANT LE GUIDAGE FORCÉ DES SUSPENSIONS INDÉPENDANTES DE VÉHICULES UTILITAIRES SUR LES REMORQUES EN FONCTION DE L'ANGLE DE LACET RELATIF ENTRE LE VÉHICULE TRACTEUR ET LE VÉHICULE TRACTÉ

(30) Priorität: 01.09.2016 DE 102016216591
(43) Veröffentlichungstag der Anmeldung: 07.03.2018
(60) Teilanmeldung: 18167593.5
(73) Patentinhaber: JOST-Werke Deutschland GmbH, 63263 Neu-Isenburg (DE)
(72) Erfinder: Dobbelaar, Jos, 5445 PA Landhorst (NL); Knook, Ruud, 5613 Eindhoven (NL)
(74) Vertreter: Ruttensperger Lachnit Trossin Gomoll

(56) Entgegenhaltungen:
- EP-A1- 0 320 383
- EP-B1- 0 100 351
- WO-A1-95/34435
- DE-A1- 1 630 625
- DE-A1- 10 317 812

## Beschreibung

Die vorliegende Erfindung betrifft eine Lenkvorrichtung für ein Sattelauflieger-Nachlauffahrzeug, zur zwangsweisen Lenkung von Rädern des Sattelauflieger-Nachlauffahrzeugs in Abhängigkeit von einer Relativgierwinkelstellung zwischen Zugfahrzeug und daran angekuppeltem Sattelauflieger-Nachlauffahrzeug gemäß dem Oberbegriff des Anspruchs 1.

Eine solche Lenkvorrichtung ist aus der DE 16 30 625 A1 bekannt.

Eine weitere, nicht gattungsgemäße Lenkvorrichtung ist von der Firma Tridec in Son (NL) unter dem Produktnamen "TF" bekannt. Es handelt sich dabei um eine Lenkvorrichtung, welche an einem Sattelauflieger-Nachlauffahrzeug (nachfolgend kurz: "Sattelauflieger") eine Lenkinformation aus dem Bereich des Königszapfens in Form von Lenkbewegung und Lenkkraft bzw. Lenkmoment mechanisch über Gestänge-Lenker-Kombinationen zu achsschenkelgelenkten Rädern am Sattelauflieger mit linearer Lenkcharakteristik überträgt. Die Achsschenkellenkung der Sattelauflieger-Räder gestattet eine verbesserte Manövrierfähigkeit des Sattelaufliegers im Straßenverkehr, etwa um enge Kurven, oder im Rangierbetrieb. Dabei wird versucht, zumindest in einem vorbestimmen Wertebereich der Relativgierwinkel zwischen Zugfahrzeuglängsachse und Sattelaufliegerlängsachse die bekannte Ackermann-Bedingung in einem gewissen Toleranzbereich einzuhalten, um bei Kurvenfahrt an den Rädern des Sattelaufliegers unerwünschten Schlupf quer zur Fahrtrichtung zu vermeiden oder wenigstens zu reduzieren.

Dann, wenn Zugfahrzeug- und Sattelaufliegerlängsachse koaxial zueinander sind, also bei einem Relativgierwinkel von 0°, fährt der aus Zugfahrzeug und Sattelauflieger gebildete Zug geradeaus. Der Relativgierwinkel ist dabei jener Winkel, welchen die Zugfahrzeuglängsachse mit der Sattelaufliegerlängsachse bei Kurvenfahrt einschließt. Je größer der Betrag des Relativgierwinkels, desto extremer die Kurvenfahrt, d. h. desto kleiner der Kurvenradius.

Die Ackermann-Bedingung wird üblicherweise in dem im gewöhnlichen Straßenverkehr üblichen Relativgierwinkelbereich von 0° bis 40° oder 45° eingehalten. Dies ermöglicht einen äußerst schlupfarmen Fahrbetrieb des Sattelaufliegers im normalen Straßenverkehr. Beim Manövrieren und Rangieren werden zwar deutlich größere Relativgierwinkel erzielt, für welche die Ackermann-Bedingung nicht mehr eingehalten werden kann und folglich die Räder über den Untergrund "radieren", jedoch sind die Zeitanteile eines Rangierbetriebs im Vergleich zum herkömmlichen Fahrbetrieb so gering, dass hier die Nichteinhaltung der Ackermann-Bedingung in Kauf genommen werden kann.

"Lineare Lenkcharakteristik" bedeutet dabei, dass mit zunehmendem Relativgierwinkel auch der Lenkwinkel der gelenkten Räder zunimmt. Die Steigerung des Lenkwinkels nimmt zwar mit Erreichen sehr großer Relativgierwinkel von 70° und mehr ab. Sie bleibt jedoch positiv, sodass - unter der vernünftigen Annahme eines maximalen Relativgierwinkels von 90° - der größte Lenkwinkel tatsächlich erst beim größten Relativgierwinkel erreicht wird.

Weiterhin ist es bekannt, Räder von Sattelaufliegern mit einer progressiven Lenkcharakteristik abhängig vom Relativgierwinkel zwischen der Zugfahrzeuglängsachse und der Sattelaufliegerlängsachse zu lenken. Bei einer progressiven Lenkcharakteristik steigt zunächst der Lenkwinkel der gelenkten Sattelauflieger-Räder abhängig vom betragsmäßigen Anstieg des Relativgierwinkels bei Verlassen der Geradeausfahrt stärker an als bei der linearen Charakteristik und erreicht einen maximalen Lenkwinkel, bevor der gebildete Zug einen maximalen Relativgierwinkel erreicht hat. Üblicherweise wird bei bekannten Lenksystemen zum Lenken von Rädern von Sattelaufliegern mit progressiver Lenkcharakteristik ein Maximum des Lenkwinkels bei etwa 2/3 des maximalen Relativgierwinkels erreicht. Übersteigt der Relativgierwinkel jenen Wert, bei welchem der maximale Lenkwinkel erreicht wird, nimmt der Lenkwinkel wieder ab.

Die Verwendung von linearen oder progressiven Lenkcharakteristika ist abhängig von den Abmessungen des jeweiligen Fahrzeugs, dessen Sattelauflieger-Räder abhängig von der Relativdrehstellung zwischen Zugfahrzeug und Sattelauflieger gelenkt werden. Eine progressive Lenkcharakteristik ist beispielsweise bevorzugt für kurze dreiachsige Sattelauflieger mit zwei gelenkten Achsen, für vierachsige Anhänger mit zwei hinteren gelenkten Achsen, für Schwerlastanhänger mit zahlreichen gelenkten Achsen oder auch für Anhänger, deren Hinterachsen überdurchschnittlich weit vom Zugfahrzeug entfernt sind.

Eine Lenkvorrichtung mit progressiver Lenkcharakteristik ist bekannt, bei welcher die Lenkinformation in Form von Lenkbewegung und Lenkkraft bzw. Lenkmoment ausgehend von der Relativgierdrehstellung zwischen Zugfahrzeug und Sattelauflieger hydraulisch zu den gelenkten Rädern des Sattelaufliegers übertragen wird. Hydraulische Lenksysteme sind jedoch aufwendig, da durch gesetzliche Vorschrift Hydrauliksysteme redundant am Sattelauflieger vorzusehen sind, sodass sich wenigstens zwei vollständige, funktionsgleiche Hydrauliksysteme an jedem Sattelauflieger befinden müssen. Das Hydrauliksystem an sich ist wiederum mit hohem Montageaufwand verbunden, um Kolben-Zylinder-Anordnungen über Druckschläuche miteinander zu verbinden und kommunizieren zu lassen.

Die eingangs genannte gattungsgemäße Lenkvorrichtung kann ohne Einsatz eines hydraulischen Kraftübertragungswegs eine nicht-lineare Lenkcharakteristik dadurch bereitstellen, dass die Lenkvorrichtung einen Übertragungshebel aufweist, der um eine zur Längsachse des Königszapfens parallele baugruppengehäusefeste Übertragungsdrehachse rotierbar ist und der zum einen an einer Plateau-Kopplungsstelle mit dem Satteldrehplateau und zum anderen an einer Hebel-Kopplungsstelle mit dem Kopplungsschwenkhebel gekoppelt ist, wobei das Übertragungsverhältnis, mit welchem der Übertragungshebel eine Drehbewegung des Satteldrehplateaus auf den Kopplungsschwenkhebel überträgt, von der Drehstellung des Satteldrehplateaus relativ zum Baugruppengehäuse abhängig ist.

Die Verwendung von achsschenkelgelenkten Rädern an Sattelaufliegern ermöglicht die Nutzung des zwischen zwei gelenkten Rädern einer Fahrzeugachse gelegenen Raums als zusätzlichen Lade- oder Stauraum, was bei der Verwendung von Starrachsen wegen des dann durch die Starrachse belegten Raums nicht möglich ist. Wird der zwischen zwei gelenkten Rädern derselben Fahrzeugachse am Sattelauflieger gelegene Raum ganz oder teilweise als Lade- oder Stauraum verwendet, steht er zur Aufnahme des Vermittlungsgestänges nicht zur Verfügung. Dieses muss daher näher zum Fahrbahnuntergrund hin verlagert werden. Dagegen liegt der Ort des Satteldrehplateaus wegen dessen Zusammenwirkens mit der Sattelkupplung des Zugfahrzeugs in der Höhe über dem Aufstandsuntergrund des Sattelaufliegers ebenfalls fest.

Es ist daher Aufgabe der vorliegenden Erfindung, die eingangs genannte Lenkvorrichtung derart weiterzubilden, dass der Raum zwischen den Rädern als Lade- oder Stauraum nutzbar ist.

Diese Aufgabe löst die vorliegende Erfindung durch die Lenkvorrichtung mit allen Merkmalen des Anspruchs 1.

Ein sich bei der Nutzung des Raums zwischen gelenkten Rädern einer Fahrzeugachse am Sattelauflieger ergebender Höhenunterschied zwischen Lenkhebel einerseits und Satteldrehplateau andererseits wird dadurch überwunden, dass der Kopplungsschwenkhebel über eine längs der Schwenkhebelachse verlaufende Schwanenhalsstange zur gemeinsamen Drehung mit einem Eingangshebel verbunden ist, an welchen die Kopplungsstange mit ihrem vom Übertragungshebel fern liegenden Längsendbereich angelenkt ist. Grundsätzlich kann das Kopplungsgestänge unmittelbar mit dem Kopplungsschwenkhebel verbunden sein. Bevorzugt ist es in dem vorliegend diskutierten Fall mit Schwanenhalsstange jedoch mittelbar mit dem Kopplungsschwenkhebel über den genannten Eingangshebel verbunden. Die Kopplungsstelle des Kopplungsgestänges mit dem Eingangshebel, die im Sinne der vorliegenden Anmeldung auch als Kopplungsstelle der Kopplungsstange mit dem Kopplungsschwenkhebel gilt, hat von der Schwenkhebelachse konstanten Abstand. Bevorzugt verläuft dann, wenn das Kopplungsgestänge nur genau eine Kopplungsstange aufweist, die Längsachse der Kopplungsstange bei Geradeausfahrt-Stellung der Lenkvorrichtung orthogonal zu einer virtuellen Gerade zwischen der Kopplungsstelle der Kopplungsstange mit dem Eingangshebel oder Kopplungsschwenkhebel und der Schwenkhebelachse. Auch dies dient zur Verbesserung der Kraft- und Bewegungsübertragung vom Satteldrehplateau unter Vermittlung der Kopplungsstange zum Kopplungsschwenkhebel zumindest in der Geradeausfahrt-Stellung.

Mit anderen Worten kann in detaillierterer konstruktiver Ausgestaltung der vorliegenden Erfindung das Kopplungsgestänge an seinem dem Satteldrehplateau näher gelegenen Längsende an der Hebel-Kopplungsstelle des Übertragungshebels angelenkt sein und an seinem anderen Längsende mit dem Kopplungsschwenkhebel mittelbar oder unmittelbar verbunden sein. Das Vermittlungsgestänge kann an seinem einen Längsende an dem Kopplungsschwenkhebel angelenkt sein und an seinem anderen Längsende an dem Lenkhebel angelenkt sein. Das Kopplungsgestänge kann gemäß einer Ausführungsform unmittelbar an dem Eingangshebel angelenkt und so mittelbar mit dem Kopplungsschwenkhebel verbunden ist.

Aufgrund der geschilderten Abmessungsverhältnisse ist es vorteilhaft, wenn der Eingangshebel in Richtung längs der Schwenkhebelachse näher bei dem Satteldrehplateau gelegen ist als der Kopplungsschwenkhebel.

Das Baugruppengehäuse ist im betriebsbereit am Sattelauflieger montierten Zustand fahrzeugrahmenfest. Es dient in der vorliegenden Beschreibung als Grundlage eines ruhenden Koordinatensystems, relativ zu welchem die Beweglichkeit weiterer Komponenten der Lenkvorrichtung beschrieben wird. Der Königszapfen kann entweder vom Baugruppengehäuse oder vom Satteldrehplateau abstehen. Bevorzugt steht der Königszapfen vom sich mit der Sattelkupplung mitdrehenden Satteldrehplateau ab, sodass nahezu keine Relativbewegung zwischen Königszapfen und Sattelkupplung auftritt.

Mit der vorgeschlagenen Lenkvorrichtung wird eine rein mechanische nicht-lineare Übertragung von Lenkinformation, Lenkbewegung und Lenkkraft (Lenkmoment) vom Bereich des Königszapfens, wo die Relativgierdrehstellung zwischen Zugfahrzeug und Sattelauflieger durch das Satteldrehplateau erfasst wird, zu den wenigstens zwei gelenkten Rädern des Sattelaufliegers möglich. Durch die rein mechanische Übertragung von Information, Bewegung und Kraft entfällt die Notwendigkeit einer redundanten Systembereitstellung, wie dies für hydraulische Systeme der Fall ist. Allein dadurch ist der Montageaufwand bereits erheblich reduziert. Darüber hinaus sind mechanische Vorrichtungen in der Regel einfacher zu montieren als hydraulische. Dies reduziert den Aufwand weiter.

Durch den Übertragungshebel kann zunächst die Drehbewegung des Satteldrehplateaus relativ zum Baugruppengehäuse über das Kopplungsgestänge mit einem Übertragungsverhältnis auf den Kopplungsschwenkhebel und von diesem über das Vermittlungsgestänge zum Lenkhebel und von dort über die Spurstangen zu den Spurstangenhebeln und den jeweiligen Radträgern übertragen werden.

Dadurch, dass das Übertragungsverhältnis, mit welchem der Übertragungshebel eine Drehbewegung des Satteldrehplateaus auf den Kopplungsschwenkhebel überträgt, nicht konstant, sondern von der Drehstellung des Satteldrehplateaus relativ zum Baugruppengehäuse abhängig ist, kann zumindest in vorbestimmten Drehstellungsbereichen des Satteldrehplateaus ein nicht-lineares Übertragungsverhältnis realisiert werden. Durch Wahl der Abmessungen des Übertragungshebels und durch Wahl der Kopplungsarten zwischen Übertragungshebel mit dem Satteldrehplateau einerseits und mit dem Kopplungsschwenkhebel andererseits können verschiedene nicht-lineare Übertragungsverhältnisse realisiert werden, je nachdem, welches für das Fahrzeug, für das die Lenkvorrichtung vorgesehen ist, das geeignetste Übertragungsverhältnis ist.

Eine klassische progressive Lenkcharakteristik, bei welcher ausgehend vom Verlassen der Geradeausfahrt-Stellung der Lenkwinkel an den Sattelauflieger-Rädern zunächst überdurchschnittlich stark ansteigt, kann dadurch erhalten werden, dass das Übertragungsverhältnis bei einer Relativdrehstellung des Satteldrehplateaus, welcher einer Geradeausfahrt mit einem Relativgierwinkel zwischen Zugfahrzeuglängsachse und Nachlauffahrzeuglängsachse von 0° zugeordnet ist, betragsmäßig am größten ist, und ausgehend von der Geradeausfahrt-Stellung mit Relativdrehstellungen, die betragsmäßig größer werdenden Relativgierwinkeln zugeordnet sind, abnimmt. Konstruktiv kann diese Charakteristik des Übertragungsverhältnisses dadurch erhalten werden, dass ein Vorsprung in einem der Bauteile aus Satteldrehplateau und Übertragungshebel in einer Nut oder einem Langloch im jeweils anderen Bauteil gleitet. Durch die Nut- oder Langlochflanken und einen daran anliegenden Vorsprungsabschnitt kann eine Drehbewegung vom Satteldrehplateau zum Übertragungshebel übertragen werden. Dadurch, dass der Vorsprung in der Nut bzw. in dem Langloch gleiten kann, kann sich mit der Drehstellung des Satteldrehplateaus der mit dem Übertragungshebel bewirkte Hebelarm ändern. Somit ist das Übertragungsverhältnis leicht veränderbar. Denn durch den gleitenden Eingriff des Vorsprungs in die Nut bzw. in das Langloch kann sich der Abstand zwischen Vorsprung und Übertragungsdrehachse oder zwischen Vorsprung und Königszapfen - je nachdem, an welchem Bauteil der Vorsprung vorgesehen ist - und damit das vom Übertragungshebel bereitgestellte Übertragungsverhältnis ändern. Bevorzugt ist die Nut im Übertragungshebel vorgesehen und ist der Vorsprung am Satteldrehplateau vorgesehen. Dadurch kann der Übertragungshebel in seinem das Satteldrehplateau überdeckenden Abschnitt mit geringem Volumen ausgebildet werden, da eine geradlinige Nut bzw. ein geradliniges Langloch, welches in der Geradeausfahrt-Stellung radial bezogen auf die Königszapfen-Längsachse verläuft, ausreichen kann.

Bevorzugt ist somit der Abstand zwischen Plateau-Kopplungsstelle und Übertragungsdrehachse veränderlich, und zwar abhängig von der Relativdrehstellung des Satteldrehplateaus relativ zum Baugruppengehäuse. Außerdem ist der Abstand zwischen Hebel-Kopplungsstelle und Übertragungsdrehachse bevorzugt konstant. Es soll jedoch nicht ausgeschlossen sein, dass zusätzlich oder alternativ der Abstand zwischen Plateau-Kopplungsstelle und Königszapfen veränderlich ist.

Das Kopplungsgestänge definiert bevorzugt die Hebel-Kopplungsstelle.

Die zur Bildung der erfindungsgemäßen Lenkvorrichtung benötigte Anzahl an Bauteilen kann dadurch gering gehalten werden, dass wenigstens ein Gestänge aus Kopplungsgestänge und Vermittlungsgestänge nur genau eine Verbindungsstange zwischen ihren jeweiligen Verbindungspunkten aufweist, also zwischen dem Übertragungshebel und dem Kopplungsschwenkhebel im Falle des Kopplungsgestänges und zwischen dem Kopplungsschwenkhebel und dem Lenkhebel im Falle des Vermittlungsgestänges.

Um die Drehbewegung des Satteldrehplateaus ohne aufwendige Getriebe korrekt zu den Rädern des Sattelauflieger-Nachlauffahrzeugs zu übertragen, ist es vorteilhaft, wenn ein Gestänge aus Kopplungsgestänge und Vermittlungsgestänge in einer Geradeausfahrt-Stellung der Lenkvorrichtung eine virtuelle Ebene durchstößt, in welcher die Schwenkhebelachse und die Königszapfen-Längsachse als parallele Achsen liegen. Dabei reicht es aus, wenn genau ein Gestänge diese Bedingung erfüllt. Das jeweils andere Gestänge aus Kopplungsgestänge und Vermittlungsgestänge kann in der Geradeausfahrt-Stellung der Lenkvorrichtung parallel zu der virtuellen Ebene verlaufen.

Die Geradeausfahrt-Stellung ist dabei lediglich eine Bezugsstellung zur Erleichterung der Beschreibung. Tatsächlich wird das die virtuelle Ebene durchstoßende Gestänge die Ebene in einem Großteil unterschiedlicher Betriebsstellungen der Lenkvorrichtung, vorzugsweise in allen Betriebsstellungen - also für alle Relativdrehstellungen des Satteldrehplateaus -, durchstoßen.

Zur Verringerung der Anzahl an Bauteilen, die zur Bildung der Lenkvorrichtung benötigt werden, ist es vorteilhaft, wenn ein Gestänge aus Kopplungsgestänge und Vermittlungsgestänge genau eine Verbindungsstange aufweist und das jeweils andere Gestänge zur sicheren und präzisen Kraft- und Bewegungsübertragung eine Mehrzahl von, aus Gründen einer vorteilhaft niedrigen Gesamtbauteileanzahl bevorzugt genau zwei, Verbindungsstangen aufweist. In diesem Fall ist es bevorzugt, dass dasjenige Gestänge mit nur genau einer Verbindungsstange in einer Geradeausfahrt-Stellung der Lenkvorrichtung die virtuelle Ebene durchstößt.

Gemäß einer ersten möglichen Ausführungsform der vorliegenden Erfindung kann das Kopplungsgestänge nur genau eine Kopplungsstange aufweisen. Die Kopplungsstange ist dann bevorzugt die einzige Bewegungs- und Kraftübertragung zwischen Übertragungshebel und Kopplungsschwenkhebel. Die Kopplungsstange liegt dann abschnittsweise auf unterschiedlichen Seiten der durch die Schwenkhebelachse und die Königszapfen-Längsachse definierten virtuellen Ebene.

Die Kopplungsstange schneidet dann - bei Betrachtung eines auf ebenem horizontalen Untergrund abgestellten Sattelaufliegers - eine vertikale Längsmittelebene des die erfindungsgemäße Lenkvorrichtung betriebsmäßig tragenden Sattelaufliegers.

Auch die Übertragungsdrehachse liegt als parallele Drehachse bevorzugt in der durch die Königszapfen-Längsachse und die Schwenkhebelachse definierten virtuellen Ebene, wobei bevorzugt der Durchstoßort der Kopplungsstange durch die virtuelle Ebene in einem Bereich gelegen ist, welcher die Abstandsmitte zwischen Übertragungsdrehachse und Schwenkhebelachse enthält und sich ausgehend von der Abstandsmitte nicht mehr als 10 % des Gesamtabstands zwischen Übertragungsdrehachse und Schwenkhebelachse zu den beiden Achsen hin erstreckt.

Das Vermittlungsgestänge umfasst in dieser Ausführungsform bevorzugt wenigstens zwei, besonders bevorzugt genau zwei Vermittlungsstangen als Verbindungsstangen zwischen dem Kopplungsschwenkhebel und dem Lenkhebel. Bei Geradeausfahrt-Stellung der Lenkvorrichtung liegt die oben definierte virtuelle Ebene, die selbstverständlich über die sie definierenden Achsen hinausreicht, für eine symmetrische Kraftübertragung vorteilhaft äquidistant zwischen den Verbindungsstangen. Die Verbindungsstangen sind bevorzugt parallel zueinander und parallel zur virtuellen Ebene.

Gemäß einer alternativen Ausführungsform kann das Kopplungsgestänge wenigstens zwei, vorzugsweise genau zwei Kopplungsstangen aufweisen, welche - wie in der zuvor beschriebenen Ausführungsform - bevorzugt parallel zueinander und in Geradeausfahrt-Stellung parallel zur virtuellen Ebene verlaufen. Bei Geradeausfahrt-Stellung der Lenkvorrichtung liegt die virtuelle Ebene für eine symmetrische Kraftübertragung vorteilhaft äquidistant zwischen den Kopplungsstangen.

Dann weist das Vermittungsgestänge vorteilhaft nur eine Vermittlungsstange auf, welche die virtuelle Ebene wenigstens in der Geradeausfahrt-Stellung, vorzugsweise in einem Großteil der möglichen Betriebsstellungen, besonders bevorzugt in allen Betriebsstellungen der Lenkvorrichtung, durchstößt. Die einzige Vermittlungsstange liegt dann abschnittsweise auf unterschiedlichen Seiten der virtuellen Ebene.

Der Durchstoßort der einzigen Vermittlungsstange durch die virtuelle Ebene liegt dann bevorzugt in einem Bereich, welcher die Abstandsmitte zwischen Schwenkhebelachse und Lenkachse enthält und sich ausgehend von der Abstandsmitte nicht mehr als 10 % des Gesamtabstands zwischen Schwenkhebelachse und Lenkachse zu den beiden Achsen hin erstreckt.

Eine effiziente Übertragung von Lenkbewegung, Lenkkraft und Lenkinformation von dem Satteldrehplateau zum Kopplungsschwenkhebel mittels der Koppelstange kann dadurch sichergestellt werden, dass eine virtuelle erste Verbindungsgerade zwischen Plateau-Kopplungsstelle und Übertragungsdrehachse mit einer virtuellen zweiten Verbindungsgerade zwischen Hebel-Kopplungsstelle und Übertragungsdrehachse einen Winkel einschließt, vorzugsweise einen Winkel im Bereich von 65° und 115°.

Bevorzugt ist dann, wenn das Kopplungsgestänge nur genau eine Kopplungsstange aufweist, die Längsachse der Kopplungsstange in einer der Geradeausfahrt zugeordneten Stellung des Übertragungshebels orthogonal zu der zuvor genannten zweiten Verbindungsgerade orientiert, sodass eine Bewegung des Übertragungshebels im Bereich um seine der Geradeausfahrt zugeordneten Relativstellung nahe dieser Stellung zu einer nahezu reinen Längsbewegung und damit Schub- oder Zugbewegung -je nach Lenkrichtung des Zugfahrzeugs - der Kopplungsstange führt.

Zur besonders exakten Übertragung von Lenkbewegungen auf die gelenkten Räder auf beiden Seiten eines Sattelaufliegers ist bevorzugt der Kopplungsschwenkhebel ein zweiarmiger Hebel, zwischen dessen beiden Armen die Schwenkhebelachse gelegen ist. Somit kann jedem Arm des Kopplungsschwenkhebels eine Fahrzeugseite und die dort ausgeführte bzw. auszuführende Lenkbewegung zugeordnet sein. An je einem Arm des Kopplungsschwenkhebels kann je eine Stange des wenigstens zwei, vorzugsweise genau zwei Verbindungsstangen aufweisenden Gestänges angelenkt sein.

Hierzu ist bevorzugt vorgesehen, dass das Vermittlungsgestänge zwei Vermittlungsstangen aufweist, von welchen je eine von je einem Arm des Kopplungsschwenkhebels zum Lenkhebel verläuft. Somit ist jedem lenkbaren Rad auf beiden Seiten eines Sattelaufliegers eine eigene Stange zugeordnet, welche die Lenkinformation, Lenkbewegung und Lenkkraft vom Kopplungsschwenkhebel zum Lenkhebel überträgt.

Alternativ kann das Kopplungsgestänge zwei Kopplungsstangen aufweisen, von welchen je eine vom Übertragungshebel zu je einem Arm des Kopplungsschwenkhebels verläuft.

Die beiden Stangen: Kopplungsstangen oder Vermittlungsstangen, kreuzen sich bevorzugt nicht. Sie können parallel verlaufen, sie können jedoch auch einen Winkel einschließen, je nachdem, ob, - und wenn ja, welches - mit dem jeweiligen Gestänge ein weiteres Übertragungsverhältnis zwischen einer Kopplungsschwenkhebelbewegung und einer Satteldrehplateaubewegung beziehungsweise Lenkhebelbewegung realisiert werden soll.

Aufgrund der oben genannten bevorzugten Ausführungsformen der vorliegenden Erfindung ist entweder der Kopplungsschwenkhebel ein wie oben beschrieben zweiarmiger Hebel, wobei dann der Eingangshebel ein einseitig von der Schwenkhebelachse auskragender einarmiger Hebel ist, oder umgekehrt.

Die vorliegende Erfindung betrifft weiter ein Sattelauflieger-Nachlauffahrzeug mit einer in den Ansprüchen definierten Lenkvorrichtung. Dieses Sattelauflieger-Nachlauffahrzeug kann zwei oder mehr gelenkte Räder aufweisen, wobei die Anzahl gelenkter Räder in der Regel eine gerade Anzahl ist, da je zwei Räder auf unterschiedlichen Seiten einer vertikalen Fahrzeuglängsmittelachse eine Fahrzeugachse bilden.

Die genannten Dreh- oder Schwenkachsen müssen nicht die einzige Dreh- oder Schwenkachse des jeweiligen Bauteils sein. Eine Schwenkbewegung des jeweiligen Bauteils muss jedoch wenigstens eine Schwenkbewegungskomponente um die zugeordnete Achse aufweisen.

Die vorliegende Erfindung wird nachfolgend anhand der beiliegenden Zeichnungen näher erläutert. Es stellt dar:
- Figur 1: eine perspektivische Unteransicht einer ersten erfindungsgemäßen Ausführungsform einer Lenkvorrichtung der vorliegenden Anmeldung an einem abschnittsweise dargestellten Sattelauflieger,
- Figur 2: eine perspektivische Ansicht des vorderen Teils der Lenkvorrichtung von Fig. 1 mit Aufliegerbaugruppe und Schwanenhalsstange,
- Figur 3: eine Draufsicht auf die Bauteile der Lenkvorrichtung von Figur 2 bei Geradeausfahrt-Stellung der Lenkvorrichtung,
- Figur 4: die Draufsicht von Figur 3 bei einem Relativgierwinkel von 60° zwischen Zugfahrzeug und Sattelauflieger und
- Figur 5: eine der Ansicht von Fig. 3 entsprechende Draufsicht auf eine zweite erfindungsgemäße Ausführungsform einer Lenkvorrichtung der vorliegenden Anmeldung in Geradeausfahrt-Stellung.

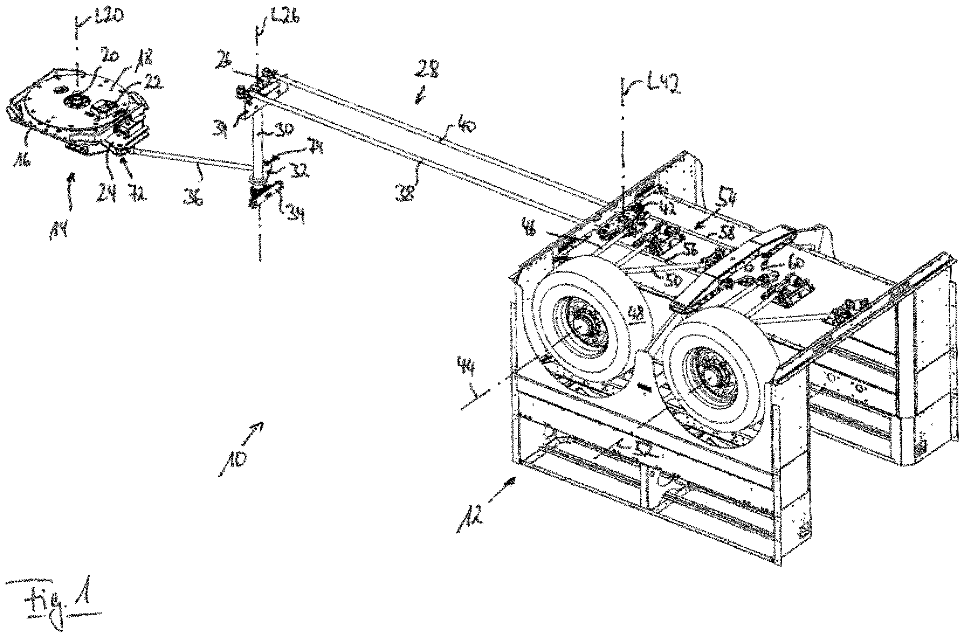

In Figur 1 ist eine erfindungsgemäße Ausführungsform der Lenkvorrichtung der vorliegenden Anmeldung allgemein mit 10 bezeichnet. Sie ist an einem teilweise dargestellten Sattelauflieger 12 angeordnet. Die Lenkvorrichtung 10 weist an ihrem im betriebsbereiten Zustand vorauseilenden Längsende eine Aufliegerbaugruppe 14 auf, welche ein sattelaufliegerrahmenfestes Baugruppengehäuse 16 und ein darin aufgenommenes Satteldrehplateau 18 aufweist. Vom Satteldrehplateau 18 steht ein Königszapfen 20 längs seiner Längsachse L20 ab. Der Königszapfen wird bei Ankupplung des Sattelaufliegers von Figur 1 an ein Zugfahrzeug in an sich bekannter Weise in die Sattelkupplung des Zugfahrzeugs eingeführt und dort verriegelt.

Das Satteldrehplateau 18 ist um die Längsachse L20 des Königszapfens 20 drehbar im Baugruppengehäuse 16 aufgenommen.

In an sich bekannter Weise weist das Satteldrehplateau 18 an seiner im Betrieb zur Sattelkupplung hinweisendenden Seite, - also auf jener Seite, von welcher auch der Königszapfen 20 absteht, - einen Drehverbindungskeil 22 auf, welcher im angekuppelten Zustand der Lenkvorrichtung 10 formschlüssig in das Fangmaul der Sattelkupplung eingreift und somit das Satteldrehplateau 18 zur gemeinsamen Drehung mit der Sattelkupplung relativ zum Baugruppengehäuse 16 koppelt.

Dann, wenn das Zugfahrzeug relativ zum angekuppelten Sattelauflieger 12 giert, also die Zugfahrzeuglängsachse in einer zum Aufstandsuntergrund parallelen Ebene einen von 0° verschiedenen Winkel mit der Sattelaufliegerlängsachse einschließt, entspricht ausgehend von der Geradeausfahrt-Stellung die Relativverdrehung des Satteldrehplateaus 18 relativ zum Baugruppengehäuse 16 dem Relativgierwinkel zwischen Zugfahrzeug und Sattelauflieger.

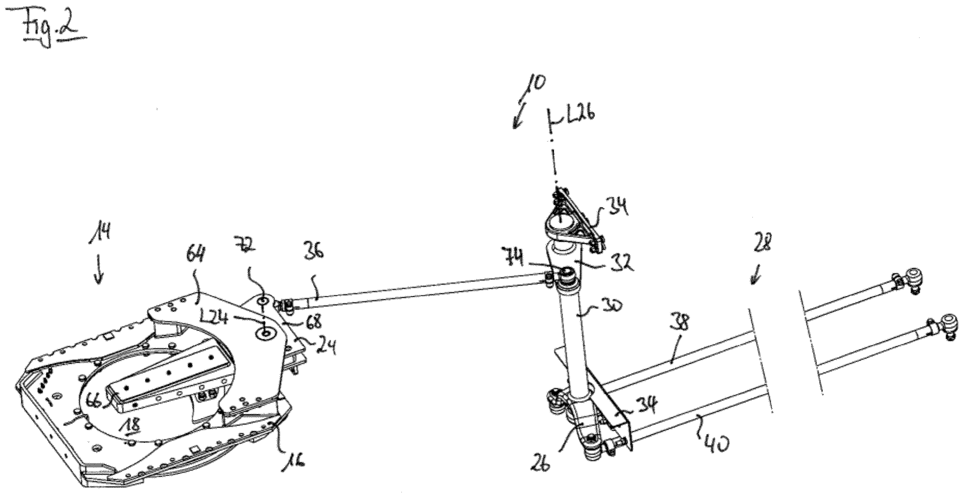

Am Baugruppengehäuse 16 ist ein weiter unten noch ausführlicher beschriebener Übertragungshebel 24 um eine zur Längsachse L20 des Königszapfens 20 parallele baugruppengehäusefeste Übertragungsdrehachse L24 schwenkbar angeordnet (siehe auch Figur 2).

Orthogonal zur Längsachse L20 des Königszapfens 20 ist in noch größerem Abstand als die Übertragungsdrehachse L24 eine Schwenkhebelachse L26 eines zweiarmigen Kopplungsschwenkhebels 26 vorgesehen.

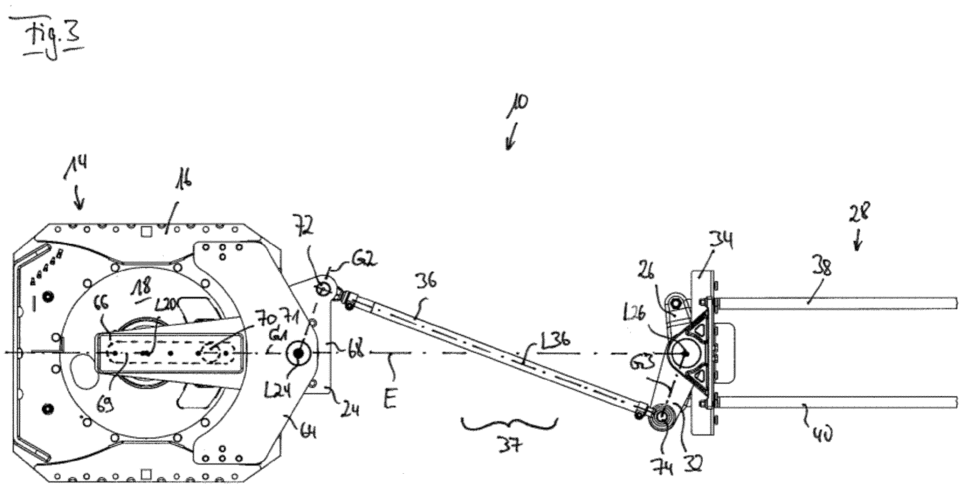

Als parallele Achsen liegen die Schwenkhebelachse L26 und die Längsachse L20 des Königszapfens 20 in einer gemeinsamen virtuellen Ebene E (siehe Figur 3). In der Geradeausfahrt-Stellung der Lenkvorrichtung 10 durchstößt die Kopplungsstange 36 diese virtuelle Ebene, bevorzugt etwa in der Längsmitte der Kopplungsstange 36.

Die virtuelle Ebene E enthält auch die Übertragungsdrehachse L24. Die Kopplungsstange 36 durchstößt dabei bevorzugt die virtuelle Ebene E im Bereich 37 der Abstandsmitte des Abstands zwischen Übertragungsdrehachse L24 und Schwenkhebelachse L26. Dieser Abstandsmittenbereich 37 erstreckt sich symmetrisch um die Abstandsmitte jeweils 10 % des Gesamtabstandes der Achsen L24 und L26 voneinander zu beiden Seiten der Abstandsmitte.

Ebenso schneidet die virtuelle Ebene in Geradeausfahrt-Stellung die Kopplungsstange 36 etwa in ihrer Längsmitte.

Zur Überbrückung eines Höhenunterschieds zwischen dem mit der Sattelkupplung zusammenwirkenden Satteldrehplateau 18 und dem näher beim Aufstandsuntergrund des Sattelaufliegers 12 gelegenen Vermittlungsgestänges 28 ist am Kopplungsschwenkhebel 26 eine Schwanenhalsstange 30 angeordnet, welche mit Abstand vom Kopplungsschwenkhebel 26 einen Eingangshebel 32 aufweist.

Die Schwanenhalsstange 30 ist gemeinsam mit dem Kopplungsschwenkhebel 26 und dem Eingangshebel 32 um die zur Längsachse L20 des Königszapfens 20 parallele Schwenkhebelachse L26 schwenkbar, die auch Längsmittelachse der Schwanenhalsstange 30 ist. In den Figuren sind sattelaufliegerrahmenfeste Halterungen 34 zur schwenkbaren Lagerung der Schwanenhalsstange 30 am Sattelaufliegerrahmen dargestellt.

Der Übertragungshebel 24 ist mittels einer Kopplungsstange 36 mit einem von der Schwanenhalsstange 36 fernliegenden Endbereich des Eingangshebels 32 verbunden. Die Verbindung der Kopplungsstange 36 ist an ihren beiden Kopplungsstellen 71 und 74 gelenkig.

Bevorzugt ist die Kopplungsstange 36 im ersten Ausführungsbeispiel das einzige Übertragungsmittel, welches eine Bewegung vom Übertragungshebel 24 bzw. von dem Satteldrehplateau 18 zum Kopplungsschwenkhebel 26 überträgt. Dagegen wird die Drehbewegung des Kopplungsschwenkhebels 26 für jede Fahrzeugseite mit einer gesonderten Vermittlungsstange 38 und 40 zu den Lenkhebeln 42 und 60 übertragen, um eine möglichst exakte Lenkung bei möglichst geringen Stangenquerschnitten zu erreichen.

Das zuvor erwähnte Vermittlungsgestänge 28 umfasst zwei im vorliegenden Beispiel parallele Vermittlungsstangen 38 und 40, welche von je einem Längsende des Kopplungsschwenkhebels 26 zu je einem Längsende eines schwenkbar am Sattelaufliegerrahmen gelagerten Lenkhebels 42 führen. Der Lenkhebel 42 ist um seine Lenkachse L42 als Schwenkachse schwenkbar, welche in Geradeausfahrt-Stellung der Lenkvorrichtung 10 zwischen den beiden Anlenkorten der Vermittlungsstangen 38 und 40 am Lenkhebel 42 gelegen ist. Die Lenkachse L42 ist parallel zur Längsachse L20 des Kopplungszapfens 20.

Von dem Lenkhebel 42 führen zu beiden Seiten der Fahrzeugachse 44 Spurstangen 46 zu Rädern 48 der Fahrzeugachse 44, durch welche die mit Einzelradaufhängung aufgehängten Räder 48 lenkbar sind. Der Übersichtlichkeit halber ist nur eine Fahrzeugseite mit Rädern und Radaufhängung versehen dargestellt.

Das Rad 48 ist in seinem dem Aufstandsuntergrund näher gelegenen Bereich durch den in Figur 1 gezeigten Lenker 50 am Sattelaufliegerrahmen angelenkt.

Ändert sich der Relativgierwinkel zwischen Zugfahrzeug und Sattelauflieger 12, ändert sich in gleichem Maße die Drehstellung des Satteldrehplateaus 18 relativ zum Baugruppengehäuse 16. Der mit dem Satteldrehplateau 18 gekoppelte Übertragungshebel 24 überträgt die Relativdrehung des Satteldrehplateaus 18 relativ zum Baugruppengehäuse 16 auf die Kopplungsstange 36 und vermittels der Kopplungsstange 36 auf den Eingangshebel 32 und damit auf den Kopplungsschwenkhebel 26. Vom Kopplungshebel 26 wird die Drehbewegung des Satteldrehplateaus 18 durch das Vermittlungsgestänge 28 auf den Lenkhebel 42 und von diesem über die Spurstangen 46 auf die Räder 48 übertragen.

Eine noch weiter vom Königszapfen 20 entfernt gelegene weitere Fahrzeugachse 52 kann durch ein weiteres Vermittlungsgestänge 54 mit den Vermittlungsstangen 56 und 58 mittels eines weiteren Lenkhebels 60 und Spurstangen 62 mit dem Lenkhebel 42 gekoppelt sein. So können mehrere hintereinander gelegene Fahrzeugachsen durch mehrere aufeinanderfolgende Vermittlungsgestänge lenkbar am Sattelauflieger 12 vorgesehen sein.

Wie nachfolgend anhand der Figuren 2 bis 4 veranschaulicht werden soll, sorgt gerade die Verwendung des zwischen dem Satteldrehplateau 18 und der Kopplungsstange 36 angeordneten Übertragungshebels 24 dafür, dass eine Relativdrehung des Satteldrehplateaus 18 relativ zum Baugruppengehäuse 16 nicht-linear, insbesondere progressiv, zu den gelenkten Rädern 48 übertragen wird.

Eine progressive Lenkcharakteristik bedeutet dabei am gezeigten Ausführungsbeispiel, dass eine Relativdrehung des Satteldrehplateaus 18 aus der in Figur 3 dargestellten Geradeausfahrt-Stellung heraus in unmittelbarer Nähe zur Geradeausfahrt-Stellung mit größerem Übertragungsverhältnis übertragen wird als in zunehmendem Winkelabstand von der Geradeausfahrt-Stellung.

Dabei nimmt das Übertragungsverhältnis nicht etwa linear mit dem Relativgierwinkel zwischen Zugfahrzeug und Sattelauflieger 12 ab, sondern das Übertragungsverhältnis nimmt nicht-linear ab. Das Übertragungsverhältnis wird umso schneller kleiner, je größer der Relativgierwinkel zwischen Zugfahrzeug und Sattelauflieger 12 ist.

Als Übertragungsverhältnis wird dabei verstanden die Änderung der Drehwinkelstellung des Übertragungshebels 24 um seine Übertragungsdrehachse L24 im Verhältnis zu der diese Änderung bewirkenden Änderung der Drehstellung des Satteldrehplateaus 18 relativ zum Baugruppengehäuse 16 um die Längsachse L20 des Königszapfens.

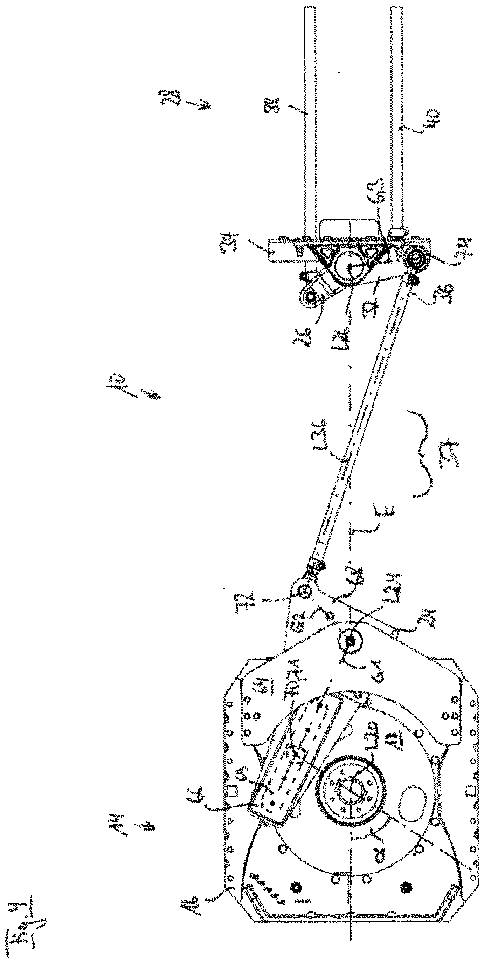

Die Figuren 3 und 4 veranschaulichen das Prinzip: In Figur 3 ist eine Draufsicht der Aufliegerbaugruppe 14 der Lenkvorrichtung 10 in Geradeausfahrt-Stellung dargestellt. In Figur 4 ist dieselbe Ansicht bei einem Relativgierwinkel α von 60° zwischen Zugfahrzeug und Nachlauffahrzeug dargestellt. Dementsprechend ist in Figur 4 das Satteldrehplateau 18 relativ zu der in Figur 3 gezeigten Stellung um 60° verdreht.

Alle zuvor beschriebenen Drehachsen L20, L24, L26 und L42 stehen orthogonal zu den Zeichenebenen der Figuren 3 und 4.

Der Übertragungshebel 24 ist an einem Hilfsrahmen 64 um seine Übertragungsdrehachse L24 drehbar angelenkt. Der Hilfsrahmen 64 ist starr mit dem Baugruppengehäuse 16 verbunden.

Der Übertragungshebel 24 weist zwei Hebelarme 66 und 68 auf, welche sich jeweils ausgehend von der Übertragungsdrehachse L24 in unterschiedliche Richtungen erstrecken. Der mit dem Satteldrehplateau 18 gekoppelte Arm 66 des Übertragungshebels 24 weist auf seiner dem Satteldrehplateau 18 zuweisenden Seite eine strichliniert eingezeichnete Nut 69 auf, in welche ein vom Satteldrehplateau 18 zum Übertragungshebel 24 hin abstehender Vorsprung 70 in der Art einer Kulissenführung eingreift. Der Berührbereich, in welchem der Vorsprung 70 wenigstens eine Flanke der Nut 68 berührt, ist eine Plateau-Kopplungsstelle 71, an welcher das Satteldrehplateau 18 zur gemeinsamen Bewegung mit dem Arm 68 des Übertragungshebels 24 gekoppelt ist. Der Vorsprung 70 verschwenkt im Falle einer Drehbewegung des Satteldrehplateaus 18 nicht nur den Arm 66 des Übertragungshebels 24, sondern gleitet auch längs desselben, wodurch sich der Abstand des Vorsprungs 70 von der Übertragungsdrehachse L24 mit Änderung der Drehstellung des Satteldrehplateaus 18 ebenfalls ändert. Darüber hinaus liegt der Vorsprung 70 nur in der Geradeausfahrt-Stellung so an den Flanken der Nut 69 an, dass eine Drehbewegung des Satteldrehplateaus 18 aus der Geradeausfahrt-Stellung heraus im ersten Augenblick orthogonal zur Flanke der Nut 69 und damit schlupffrei erfolgt. Je weiter sich der Vorsprung 70 jedoch von der Geradeausfahrt-Stellung entfernt, desto größer wird der Gleitanteil der Bewegung des Vorsprungs 70 relativ zur Nut 69 in deren Längsrichtung, sodass ein immer geringerer Anteil der Drehbewegung des Satteldrehplateaus 18 mit zunehmendem Relativgierwinkel in eine Schwenkbewegung des Übertragungshebels 24 übersetzt wird.

Der andere Arm 68 des Übertragungshebels 24 weist an seinem von der Übertragungsdrehachse L24 fernliegenden Ort die Hebel-Kopplungsstelle 72 mit der Kopplungsstange 36 auf. Eine Verbindungsgerade G2 der Hebel-Kopplungsstelle 72 mit der Übertragungsdrehachse L24 und eine Verbindungsgerade G1 der Plateau-Kopplungsstelle 71 mit der Übertragungsdrehachse L24 schließen einen Winkel von etwa 110° ein.

Um besonders im Bereich der Geradeausfahrt-Stellung eine möglichst große Übertragung der Drehbewegung des Satteldrehplateaus 18 zu den Lenkhebeln 42 und 60 der Fahrzeugachsen 44 und 52 übertragen zu können, ist in der Geradeausfahrt-Stellung bevorzugt die Längsachse L36 der Kopplungsstange 36 sowohl orthogonal zur virtuellen Verbindungsgerade G2 zwischen der Übertragungsdrehachse L24 und der Kopplungsstelle 72 als auch orthogonal zur virtuellen Gerade G3, welche die Schwenkhebelachse L26 mit der Kopplungsstelle 74 der Kopplungsstange 36 mit dem Eingangshebel 32 verbindet. In einem infinitesimal kleinen ersten Augenblick einer Schwenkbewegung des Übertragungshebels 24 bzw. des Satteldrehplateaus 18 wird die Drehbewegung des Satteldrehplateaus 18 schlupffrei zu den Fahrzeugachsen 44 und 52 übertragen. Mit zunehmend größer werdendem Relativgierwinkel wird der zu den Fahrzeugachsen 44 und 52 übertragene Anteil der Drehbewegung des Satteldrehplateaus 18 immer geringer.

Dadurch kann erreicht werden, dass zu Beginn der Gierbewegung des Zugfahrzeugs relativ zum Sattelauflieger 12 verhältnismäßig schnell ein relativ großer Lenkeinschlag der zwangsgelenkten Räder 48 an den Fahrzeugachsen 44 und 52 erreicht wird, der sich mit zunehmendem Gierwinkel zwischen Zugfahrzeug und Sattelauflieger 12 immer weniger vergrößert und ab Überschreiten eines vorbestimmten Relativgierwinkels sogar wieder abnimmt.

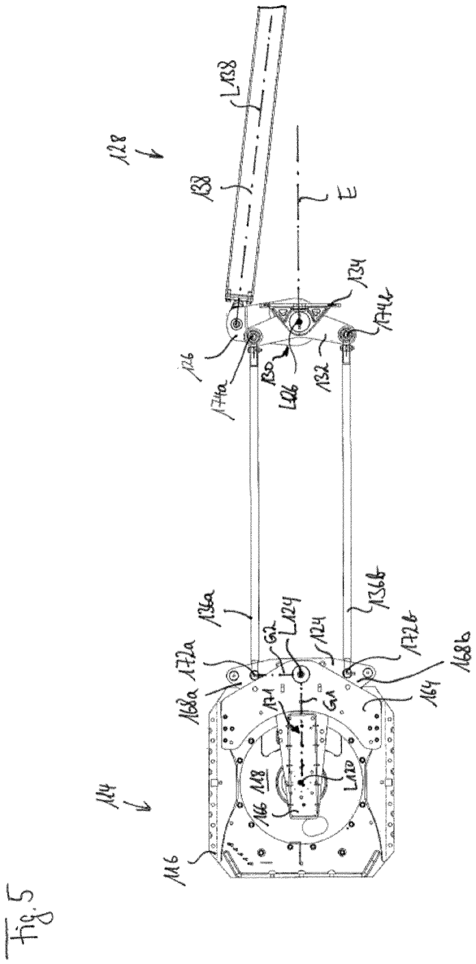

Figur 5 zeigt in gleicher Perspektive wie Figur 3 eine zweite Ausführungsform einer erfindungsgemäßen Lenkvorrichtung. Die zweite Ausführungsform der Figur 5, bei welcher gleiche und funktionsgleiche Bauteile und Bauteilabschnitte mit gleichen Bezugszahlen versehen sind wie in der ersten Ausführungsform, jedoch erhöht um die Zahl 100, wird nachfolgend nur insoweit beschrieben werden, als sie sich von der ersten Ausführungsform unterscheidet. Zur übrigen Beschreibung der zweiten Ausführungsform wird ausdrücklich auf die Beschreibung der ersten Ausführungsform verwiesen, die auch für die zweite Ausführungsform gilt, sofern nichts Abweichendes ausgesagt ist.

Bei der zweiten Ausführungsform von Figur 5 ist das Kopplungsgestänge gebildet durch zwei zueinander parallele Kopplungsstangen 136a und 136b. Folglich ist der Übertragungshebel 124 beidseitig der Übertragungsdrehachse L124 ausgebildet und weist zwei Hebelarme 168a und 168b auf. Gleiche Kleinbuchstaben hinter den Bezugszeichen indizieren dabei einen Zusammenhang der so bezeichneten Bauteile. Folglich ist der Hebelarm 168a an der Hebel-Kopplungsstelle 172a mit der Kopplungsstange 136a verbunden. Für die entsprechenden Bauteile mit Kleinbuchstaben b gilt das Nämliche.

In Geradeausfahrt-Stellung, welche in Figur 5 gezeigt ist, verlaufen die Kopplungsstangen 136a und 136b parallel zur virtuellen Ebene E und zwar jeweils in gleichem Abstand von dieser.

Der Eingangshebel 132 ist wegen der zwei vorhandenen Kopplungsstangen 136a und 136b als zweiarmiger Hebel ausgebildet, wobei die Schwenkhebelachse L126 zwischen den beiden Armen des Eingangshebels 132 verläuft, wiederum äquidistant.

Dafür ist im Vergleich zur ersten Ausführungsform der Kopplungsschwenkhebel 126 einarmig ausgebildet und kragt einseitig von der Schwenkhebelachse L126 aus.

Die Bauteilanordnung umfassend Eingangshebel, Schwanenhalsstange und Kopplungsschwenkhebel weist somit bevorzugt immer die Schwanenhalsstange, einen einarmigen Hebel und einen zweiarmigen Hebel auf.

Der Kopplungsschwenkhebel 126 in der zweiten Ausführungsform ist deshalb einarmig ausgebildet, weil das Vermittlungsgestänge 128 nur genau eine Vermittlungsstange 138 aufweist, die den Kopplungsschwenkhebel 126 mit einem in Figur 5 nicht dargestellten Lenkhebel verbindet. Auch die Eingangsseite des Lenkhebels kann daher einarmig ausgebildet sein im Vergleich zur ersten Ausführungsform.

Die Verbindungsstange 138 durchstößt in ihrem Verlauf zwischen Kopplungsschwenkhebel 126 und dem Lenkhebel die virtuelle Ebene E, und zwar bevorzugt in einem Bereich um die Abstandsmitte zwischen Schwenkhebelachse L126 und Lenkachse, wobei der Bereich die Abstandsmitte enthält und sich ausgehend von dieser nicht mehr als 10 % des Gesamtabstands zwischen den genannten Achsen zu den beiden Achsen hin erstreckt.

Die einzige Vermittlungsstange 138 ist im dargestellten Beispiel durch eine Stange mit Vierkanthohlprofil mit Rechteckquerschnitt gebildet, sodass sie in Richtung der Schwenkhebelachse L126 und der Lenkachse kurz, orthogonal hierzu jedoch breit ausgebildet sein kann und somit als Flachprofil ausreichend Steifigkeit zur Übertragung der notwenigen Lenkkräfte besitzt.

## Patentansprüche

1. Lenkvorrichtung (10; 110) für ein Sattelauflieger-Nachlauffahrzeug (12), zur Lenkung von Rädern (48) des Sattelauflieger-Nachlauffahrzeugs (12) in Abhängigkeit von einer Relativgierwinkelstellung zwischen Zugfahrzeug und daran angekuppeltem Sattelauflieger-Nachlauffahrzeug (12), die Lenkvorrichtung (10; 110) umfassend:
- eine Aufliegerbaugruppe (14; 114), von welcher ein Königszapfen (20) absteht, wobei die Aufliegerbaugruppe (14; 114) aufweist:
- ein Baugruppengehäuse (16; 116) und
- ein im Baugruppengehäuse (16; 116) um eine Längsachse (L20; L120) des Königszapfens (20) drehbar gelagertes Satteldrehplateau (18; 118), welches mit einer Sattelkupplung am Zugfahrzeug zur gemeinsamen Drehung relativ zum Baugruppengehäuse (16; 116) koppelbar ist,
- wenigstens einen um eine zu einer Schwenkhebelachse (L26; L126) parallele Lenkachse (L42) schwenkbaren Lenkhebel (42, 60),
- wenigstens zwei Einzelradaufhängungen derselben Fahrzeugachse (44, 52), welche in einer zur Längsachse (L20; L120) des Königszapfens (20) orthogonalen Richtung voneinander entfernt angeordnet sind und zwischen welchen der Lenkhebel (42, 60) angeordnet ist, mit jeweils einem um eine Lenkdrehachse drehbaren Radträger, wobei von jedem Radträger je ein Spurstangenhebel absteht,
- ein Plateau-Lenk-Gestänge (26, 28, 36; 126, 128, 136a, 136b) zur Übertragung einer Drehbewegung von dem Satteldrehplateau (18; 118) zu dem Lenkhebel (42, 60), und
- wenigstens zwei Spurstangen (46), welche zwischen dem Lenkhebel (42) und je einem Spurstangenhebel zur Übertragung einer Lenkbewegung vom Lenkhebel (42, 60) zu den Spurstangenhebeln angeordnet sind,
wobei die Lenkvorrichtung (10; 110) einen Übertragungshebel (24; 124) aufweist, welcher um eine zur Längsachse (L20) des Königszapfens (20) parallele baugruppengehäusefeste Übertragungsdrehachse (L24; L124) rotierbar ist und welcher zum einen an einer Plateau-Kopplungsstelle mit dem Satteldrehplateau (18; 118) und zum anderen an einer Hebel-Kopplungsstelle (72; 172a, 172b) mit dem Plateau-Lenk-Gestänge (26, 28, 36; 126, 128, 136a, 136b) gekoppelt ist, wobei das Übertragungsverhältnis, mit welchem der Übertragungshebel (24; 124) eine Drehbewegung des Satteldrehplateaus (18; 118) überträgt, von der Drehstellung des Satteldrehplateaus (18; 118) relativ zum Baugruppengehäuse (16; 116) abhängig ist,
**dadurch gekennzeichnet, dass** das Plateau-Lenk-Gestänge (26, 28, 36; 126, 128, 136a, 136b) gebildet ist aus:
- einem vom Satteldrehplateau (18; 118) in einem ersten Abstand orthogonal zur Längsachse (L20; L120) des Königszapfens (20) angeordneten, um die Schwenkhebelachse (L26; L126) schwenkbaren Kopplungsschwenkhebel (26; 126),
- einem Kopplungsgestänge (36; 136a, 136b), welches zwischen dem Satteldrehplateau (18; 118) und dem Kopplungsschwenkhebel (26; 126) zur Übertragung einer Drehbewegung von dem Satteldrehplateau (18; 118) zum Kopplungsschwenkhebel (26; 126) angeordnet ist, und
- einem Vermittlungsgestänge (28; 128), welches zwischen dem Kopplungsschwenkhebel (26; 126) und dem Lenkhebel (42, 60) zur Übertragung einer Schwenkbewegung von dem Kopplungsschwenkhebel (26; 126) zu dem Lenkhebel (42, 60) angeordnet ist,
so dass der Übertragungshebel (24; 124) an der Hebel-Kopplungsstelle (72; 172a, 172b) mit dem Kopplungsschwenkhebel (26; 126) gekoppelt ist und eine Drehbewegung des Satteldrehplateaus (18; 118) auf den Kopplungsschwenkhebel (26; 126) überträgt, wobei der Lenkhebel (42, 60) vom Kopplungsschwenkhebel (26; 126) in einem zweiten Abstand orthogonal zur Längsachse (L20; L120) des Königszapfens (20) angeordnet ist, wobei die wenigstens zwei Einzelradaufhängungen in einer sowohl zur Längsachse (L20; L120) des Königszapfens (20) als auch zur Richtung des zweiten Abstands orthogonalen Richtung voneinander entfernt angeordnet sind, und wobei der Kopplungsschwenkhebel (26; 126) über eine längs der Schwenkhebelachse (L26; L126) verlaufende Schwanenhalsstange (30; 130) zur gemeinsamen Drehung mit einem Eingangshebel (32; 132) verbunden ist, an welchen das Kopplungsgestänge (36; 136a, 136b) angelenkt ist.

2. Lenkvorrichtung (10; 110) für ein Sattelauflieger-Nachlauffahrzeug (12) nach Anspruch 1,
**dadurch gekennzeichnet, dass** das Übertragungsverhältnis bei einer Relativdrehstellung des Satteldrehplateaus (18; 118), welcher einer Geradeausfahrt mit einem Relativgierwinkel (a) zwischen Zugfahrzeuglängsachse und Nachlauffahrzeuglängsachse von 0° zugeordnet ist, betragsmäßig am größten ist, und ausgehend von der Geradeausfahrt-Stellung mit Relativdrehstellungen, die betragsmäßig größer werdenden Relativgierwinkeln (a) zugeordnet sind, abnimmt.

3. Lenkvorrichtung (10; 110) für ein Sattelauflieger-Nachlauffahrzeug (12) nach Anspruch 2,
**dadurch gekennzeichnet, dass** ein Vorsprung (70) in einem der Bauteile aus Satteldrehplateau (18; 118) und Übertragungshebel (24; 124) in einer Nut (68) oder einem Langloch im jeweils anderen Bauteil gleitet.

4. Lenkvorrichtung (10) für ein Sattelauflieger-Nachlauffahrzeug (12) nach einem der vorhergehenden Ansprüche,
**dadurch gekennzeichnet, dass** Schwenkhebelachse (L26) und die Königszapfen-Längsachse (L20) als parallele Achsen in einer gemeinsamen virtuellen Ebene (E) liegen und ein Gestänge aus Kopplungsgestänge (36; 136a, 136b) und Vermittlungsgestänge (28; 128) in einer Geradeausfahrt-Stellung der Lenkvorrichtung (10; 110) die virtuelle Ebene (E) durchstößt.

5. Lenkvorrichtung (10; 110) für ein Sattelauflieger-Nachlauffahrzeug (12) nach Anspruch 4,
**dadurch gekennzeichnet, dass** das jeweils andere Gestänge aus Kopplungsgestänge (36; 136a, 136b) und Vermittlungsgestänge (28; 128) in einer Geradeausfahrt-Stellung der Lenkvorrichtung (10; 110) parallel zu der virtuellen Ebene (E) verläuft.

6. Lenkvorrichtung (10; 110) für ein Sattelauflieger-Nachlauffahrzeug (12) nach Anspruch 4 oder 5,
**dadurch gekennzeichnet, dass** ein Gestänge aus Kopplungsgestänge (36; 136a, 136b) und Vermittlungsgestänge (28; 128) genau eine Verbindungsstange (36; 138) aufweist und das jeweils andere Gestänge eine Mehrzahl von, vorzugsweise genau zwei, Verbindungsstangen (38, 40; 136a, 136b) aufweist, wobei dasjenige Gestänge mit nur genau einer Verbindungsstange (36; 138) in einer Geradeausfahrt-Stellung der Lenkvorrichtung (10; 110) die virtuelle Ebene (E) durchstößt.

7. Lenkvorrichtung (10; 110) für ein Sattelauflieger-Nachlauffahrzeug (12) nach einem der vorhergehenden Ansprüche,
**dadurch gekennzeichnet, dass** eine virtuelle erste Verbindungsgerade (G1) zwischen Plateau-Kopplungsstelle (71; 171) und Übertragungsdrehachse (L24; L124) mit einer virtuellen zweiten Verbindungsgerade (G2) zwischen Hebel-Kopplungsstelle (72; 172a, 172b) und Übertragungsdrehachse (L24; L124) einen Winkel einschließt, vorzugsweise einen Winkel im Bereich von 65° und 115°.

8. Lenkvorrichtung (10) für ein Sattelauflieger-Nachlauffahrzeug (12) nach einem der vorhergehenden Ansprüche,
**dadurch gekennzeichnet, dass** der Eingangshebel (32) in Richtung längs der Schwenkhebelachse L26) näher bei dem Satteldrehplateau (18) gelegen ist als der Kopplungsschwenkhebel (26).

9. Lenkvorrichtung (10; 110) für ein Sattelauflieger-Nachlauffahrzeug (12) nach einem der vorhergehenden Ansprüche,
**dadurch gekennzeichnet, dass** das Kopplungsgestänge (36; 136a, 136b) an seinem dem Satteldrehplateau (18; 118) näher gelegenen Längsende an der Hebel-Kopplungsstelle (72; 172a, 172b) des Übertragungshebels (24; 124) angelenkt ist und an seinem anderen Längsende mit dem Kopplungsschwenkhebel (26; 126) mittelbar oder unmittelbar verbunden ist, wobei weiter das Vermittlungsgestänge (28; 128) an seinem einen Längsende an dem Kopplungsschwenkhebel (26; 126) angelenkt ist und an seinem anderen Längsende an dem Lenkhebel (42, 60) angelenkt ist.

10. Lenkvorrichtung (10; 110) für ein Sattelauflieger-Nachlauffahrzeug (12) nach Anspruch 9,
**dadurch gekennzeichnet, dass** das Kopplungsgestänge (36; 136a, 136b) unmittelbar an dem Eingangshebel (32; 132) angelenkt und so mittelbar mit dem Kopplungsschwenkhebel (26; 126) verbunden ist.

11. Sattelauflieger-Nachlauffahrzeug (12) mit einer Lenkvorrichtung (10) nach einem der vorhergehenden Ansprüche.

## Claims

1. A steering apparatus (10; 110) for a semitrailer towed vehicle (12), for steering wheels (48) of the semitrailer towed vehicle (12) as a function of a relative yaw angle position between the towing vehicle and the semitrailer towed vehicle (12) hitched thereto, the steering apparatus (10; 110) encompassing:
- a trailer subassembly (14; 114) from which a kingpin (20) protrudes, the trailer subassembly (14; 114) comprising:
- a subassembly housing (16; 116); and
- a trailer turntable (18; 118) that is mounted in the subassembly housing (16; 116) rotatably around a longitudinal axis (L20; L120) of the kingpin (20) and is couplable to a fifth-wheel coupling on the towing vehicle for rotation together relative to the subassembly housing (16; 116);
- at least one steering lever (42, 60) pivotable around a steering axis (L42) parallel to a pivot lever axis (L26; L126);
- at least two independent suspension systems of the same vehicle axle (44, 52), which are arranged at a distance from one another in a direction orthogonal to the longitudinal axis (L20; L120) of the kingpin (20), and between which the steering lever (42, 60) is arranged, each having a wheel carrier rotatable around a steering rotation axis, a respective tie rod lever protruding from each wheel carrier;
- a turntable steering linkage (26, 28, 36; 126, 128, 136a, 136b) for transferring a rotational motion from the trailer turntable (18; 118) to the steering lever (42, 60); and
- at least two tie rods (46) that are arranged between the steering lever (42) and a respective tie rod lever in order to transfer a steering motion from the steering lever (42, 60) to the tie rod levers,
the steering apparatus (10; 110) comprising a transfer lever (24; 124) that is rotatable around a subassembly-housing-mounted transfer rotation axis (L24; L124) parallel to the longitudinal axis (L20) of the kingpin (20) and is coupled on the one hand to the trailer turntable (18; 118) at a turntable coupling point and on the other hand to the turntable steering linkage (26, 28, 36; 126, 128, 136a, 136b) at a lever coupling point (72; 172a, 172b), the conversion ratio with which the transfer lever (24; 124) transfers a rotational motion of the trailer turntable (18; 118) being dependent on the rotational position of the trailer turntable (18; 118) relative to the subassembly housing (16; 116),
wherein the turntable steering linkage (26, 28, 36; 126, 128, 136a, 136b) is constituted from:
- a coupling pivot lever (26; 126) that is arranged with a first spacing from the trailer turntable (18; 118) orthogonally to the longitudinal axis (L20; L120) of the kingpin (20) and is pivotable around the pivot lever axis (L26; 126);
- a coupling linkage (36; 136a, 136b) that is arranged between the trailer turntable (18; 118) and the coupling pivot lever (26; 126) in order to transfer a rotational motion from the trailer turntable (18; 118) to the coupling pivot lever (26; 126); and
- a relay linkage (28; 128) that is arranged between the coupling pivot lever (26; 126) and the steering lever (42, 60) in order to transfer a pivoting motion from the coupling pivot lever (26; 126) to the steering lever (42, 60),
in such a way that the transfer lever (24; 124) is coupled to the coupling pivot lever (26; 126) at the lever coupling point (72; 172a, 172b) and transfers a rotational motion of the trailer turntable (18; 118) to the coupling pivot lever (26; 126), the steering lever (42, 60) being arranged with a second spacing from the coupling pivot lever (26; 126) orthogonally to the longitudinal axis (L20; L120) of the kingpin (20), the at least two independent suspension systems being arranged at a distance from one another in a direction that is orthogonal both to the longitudinal axis (L20; L120) of the kingpin (20) and to the direction of the second spacing, and the coupling pivot lever (26; 126) being connected, via a gooseneck rod (30; 130) proceeding along the pivot lever axis (L26; L126), for rotation together with an input lever (32; 132) on which the coupling linkage (36; 136a, 136b) is articulated.

2. The steering apparatus (10; 110) for a semitrailer towed vehicle (12) according to Claim 1, wherein the transfer ratio has its greatest magnitude for a relative rotational position of the trailer turntable (18; 118) which is associated with straight-ahead travel with a relative yaw angle (α) of 0 degrees between the longitudinal towing-vehicle axis and the longitudinal towed-vehicle axis, and decreases proceeding from the straight-ahead travel position with relative rotational positions that are associated with relative yaw angles (α) whose magnitude becomes greater.

3. The steering apparatus (10; 110) for a semitrailer towed vehicle (12) according to Claim 2, wherein a protrusion (70) in one of the components from among the trailer turntable (18; 118) and transfer lever (24; 124) slides in a groove (68) or an elongated hole in the respective other component.

4. The steering apparatus (10) for a semitrailer towed vehicle (12) according to one of the preceding claims, wherein the pivot lever axis (L26) and the kingpin longitudinal axis (L20), constituting parallel axes, lie in a common virtual plane (E), and one linkage from among the coupling linkage (36; 136a, 136b) and the relay linkage (28; 128) passes through the virtual plane (E) when the steering apparatus (10; 110) is in a straight-ahead travel position.

5. The steering apparatus (10; 110) for a semitrailer towed vehicle (12) according to Claim 4, wherein the respective other linkage from among the coupling linkage (36; 136a, 136b) and the relay linkage (28; 128) proceeds parallel to the virtual plane (E) when the steering apparatus (10; 110) is in the straight-ahead travel position.

6. The steering apparatus (10; 110) for a semitrailer towed vehicle (12) according to Claim 4 or 5, wherein one linkage from among the coupling linkage (36; 136a, 136b) and the relay linkage (28; 128) comprises exactly one connecting rod (36; 138), and the respective other linkage comprises a plurality of, preferably exactly two, connecting rods (38, 40; 136a, 136b), such that the linkage having only exactly one connecting rod (36; 138) passes through the virtual plane (E) when the steering apparatus (10; 110) is in a straight-ahead travel position.

7. The steering apparatus (10; 110) for a semitrailer towed vehicle (12) according to one of the preceding claims, wherein a virtual first connecting line (G1) between the turntable coupling point (71; 171) and the transfer rotation axis (L24; 124) encloses an angle, preferably an angle in the range from 65 degrees to 115 degrees, with a virtual second connecting line (G2) between the lever coupling point (72; 172a, 172b) and the transfer rotation axis (L24; L124).

8. The steering apparatus (10) for a semitrailer towed vehicle (12) according to one of the preceding claims, wherein in a direction along the pivot lever axis (L26), the input lever (32) is located closer than the coupling pivot lever (26) to the trailer turntable (18).

9. The steering apparatus (10; 110) for a semitrailer towed vehicle (12) according to one of the preceding claims, wherein at its longitudinal end located closer to the trailer turntable (18; 118), the coupling linkage (36; 136a, 136b) is articulated on the lever coupling point (72; 172a, 172b) of the transfer lever (24; 124), and at its other longitudinal end is indirectly or directly connected to the coupling pivot lever (26; 126), the relay linkage (28; 128) furthermore being articulated at its one longitudinal end on the coupling pivot lever (26; 126) and being articulated at its other longitudinal end on the steering lever (42, 60).

10. The steering apparatus (10; 110) for a semitrailer towed vehicle (12) according to Claim 9, wherein the coupling linkage (36; 136a, 136b) is articulated directly on the input lever (32; 132) and is thereby indirectly connected to the coupling pivot lever (26; 126).

11. A semitrailer towed vehicle (12) having a steering apparatus (10) according to one of the preceding claims.

## Revendications

1. Dispositif de direction (10; 110) pour un véhicule semi-remorque tracté (12), pour diriger des roues (48) du véhicule semi-remorque tracté (12) en fonction d'une position d'angle d'embardée relative entre le véhicule tracteur et le véhicule semi-remorque tracté (12) accouplé, le dispositif de direction (10; 110) comprenant :
- un ensemble semi-remorque (14; 114), duquel dépasse un pivot central (20), l'ensemble semi-remorque (14; 114) comprenant :
- un boîtier d'ensemble (16; 116) et
- un plateau rotatif de sellette d'attelage (18; 118) qui est monté de manière rotative autour d'un axe longitudinal (L20; L120) du pivot central (20) dans le boîtier d'ensemble (16; 116) qui peut être accouplé à une sellette d'attelage au véhicule tracteur pour une rotation commune par rapport au boîtier d'ensemble (16; 116),
- au moins un levier de direction (42, 60) pouvant pivoter autour d'un axe de direction (L42) parallèle à un axe de levier de pivotement (L26; L126),
- au moins deux suspensions de roue indépendantes du même axe de véhicule (44, 52), qui sont disposées de manière éloignée dans une direction orthogonale par rapport à l'axe longitudinal (L20; L120) du pivot central (20) et entre lesquels est disposé le levier de direction (42, 60), avec respectivement un porte-roue rotatif autour d'un axe de rotation de direction, un levier de tige de guidage respectif faisant saillie de chaque porte-roue,
- une tringlerie de direction à plateau (26, 28, 36; 126, 128, 136a, 136b) pour transmettre un mouvement rotatif du plateau rotatif de sellette d'attelage (18; 118) au levier de direction (42, 60), et
- au moins deux tiges de guidage (46) qui sont disposées entre le levier de direction (42) et un levier de tige de guidage respectif pour transmettre un mouvement de direction du levier de direction (42, 60) aux leviers de tige de guidage,
où le dispositif de direction (10; 110) comporte un levier de transmission (24; 124) qui peut tourner autour d'un axe de rotation de transmission (L24; L124) fixé au boîtier d'ensemble et parallèle à l'axe longitudinal (L20) du pivot central (20), et qui, d'un côté, est accouplé au plateau rotatif de sellette (18; 118) à un site d'accouplement de plateau et qui d'autre côté est accouplé à la tringlerie de direction à plateau (26, 28, 36; 126, 128, 136a, 136b) à un site d'accouplement de levier, dans lequel le rapport de transmission auquel le levier de transmission (24; 124) transmet un mouvement de rotation du plateau rotatif de sellette (18; 118) dépend de la position de rotation du plateau rotatif de sellette (18; 118) par rapport au boîtier d'ensemble (16; 116),
**caractérisé en ce que** la tringlerie de direction à plateau (26, 28, 36; 126, 128, 136a, 136b) est formée par :
- un levier de pivotement d'accouplement (26, 126) disposé à une première distance orthogonale à l'axe longitudinal (L20; L120) du pivot central (20) du plateau rotatif de sellette (18; 118) pivotant autour de l'axe de levier de pivotement (L26; L126),
- une tringlerie d'accouplement (36; 136a, 136b) disposée entre ledit plateau rotatif de sellette (18; 118) et ledit levier de pivotement d'accouplement (26, 126) pour transmettre un mouvement de rotation depuis ledit plateau rotatif de sellette (18; 118) au levier de pivotement d'accouplement (26, 126), et
- une tringlerie intermédiaire (28; 128) disposée entre le levier de pivotement d'accouplement (26, 126) et le levier de direction (42, 60) pour transmettre un mouvement de pivotement du levier de pivotement d'accouplement (26, 126) au levier de direction (42, 60),
de sorte que le levier de transmission (24; 124) est accouplé à la position du levier de couplage (72; 172a, 172b) au levier de pivotement d'accouplement (26; 126) et transmet un mouvement de rotation du plateau rotatif de sellette (18; 118) au levier de pivotement d'accouplement (26; 126), le levier de direction (42, 60) étant disposé du levier de pivotement d'accouplement (26; 126) à une seconde distance, orthogonale à l'axe longitudinal (L20; L120) du pivot central (20), les au moins deux suspensions de roue indépendantes étant disposées de manière espacée l'une à l'autre dans une direction orthogonale à l'axe longitudinale (L20; L120) du pivot central (20) ainsi qu'à la direction de la deuxième distance et dans lequel le levier de pivotement d'accouplement (26, 126) est relié par une tige à col de cygne (30; 130) s'étendant le long de l'axe du levier de pivotement (L26; L126) pour une rotation commune avec un levier d'entrée (32; 132) auquel la tringlerie d'accouplement (36; 136a, 136b) est articulée.

2. Dispositif de direction (10; 110) pour un véhicule semi-remorque tracté (12) selon la revendication 1,
**caractérisé en ce que** le rapport de transmission est de valeur supérieure en cas de position de rotation relative du plateau rotatif de sellette (18; 118), à laquelle est associée une conduite droite ayant un angle d'embardée relatif (a) entre l'axe longitudinal du véhicule tracteur et l'axe longitudinal du véhicule tracté de 0°, et diminue partant de la position de conduite droite avec des positions de rotation relative associées à des angles d'embardée relatifs (a) de valeur croissante.

3. Dispositif de direction (10; 110) pour un véhicule semi-remorque tracté (12) selon la revendication 2,
**caractérisé en ce qu**'une projection (70) glisse dans l'un des composants parmi plateau rotatif de sellette (18; 118) et levier de transmission (24; 124) dans une rainure (68) ou un trou allongé dans l'autre composant respectif.

4. Dispositif de direction (10) pour un véhicule semi-remorque tracté (12) selon l'une des revendications précédentes,
**caractérisé en ce que** l'axe du levier de pivotement (L26) et l'axe longitudinal du pivot central (L20) se trouvent comme axes parallèles dans un plan virtuel commun (E) et **en ce qu'**une tringlerie parmi tringlerie d'accouplement (36; 136a, 136b) et tringlerie intermédiaire (28; 128) traverse le plan virtuel (E) dans une position de conduite droite du dispositif de direction (10; 110).

5. Dispositif de direction (10; 110) pour un véhicule semi-remorque tracté (12) selon la revendication 4,
**caractérisé en ce que** l'autre tringlerie parmi tringlerie d'accouplement (36; 136a, 136b) et tringlerie intermédiaire (28; 128) est parallèle au plan virtuel (E) dans une position de conduite droite du dispositif de direction (10; 110).

6. Dispositif de direction (10; 110) pour un véhicule semi-remorque tracté (12) selon la revendication 4 ou 5,
**caractérisé en ce qu'**une tringlerie parmi tringlerie d'accouplement (36; 136a, 136b) et tringlerie intermédiaire (28; 128) comprend exactement une tige de liaison (36; 138) et **en ce que** l'autre tringlerie respective présente une pluralité de et de préférence exactement deux tiges de liaison (38, 40; 136a, 136b), où la tringlerie avec exactement une seule tige de liaison (36; 138) perce le plan virtuel (E) dans une position de conduite droite du dispositif de direction (10; 110).

7. Dispositif de direction (10; 110) pour un véhicule semi-remorque tracté (12) selon l'une des revendications précédentes,
**caractérisé en ce qu'**une première ligne droite virtuelle de liaison (G1) entre le point d'accouplement de plateau (71; 171) et l'axe de rotation de transmission (L24; L124) renferme un angle avec une deuxième ligne droite virtuelle de liaison (G2) entre le point d'accouplement de levier (72; 172a, 172b) et l'axe de rotation de transmission (L24; L124), de préférence un angle dans une gamme comprise entre 65 et 115°.

8. Dispositif de direction (10) pour un véhicule semi-remorque tracté (12) selon l'une des revendications précédentes,
**caractérisé en ce que** le levier d'entrée (32) est situé plus près du plateau rotatif de sellette (18) dans la direction le long de l'axe de pivotement (L26) que le levier de pivotement d'accouplement (26).

9. Dispositif de direction (10; 110) pour un véhicule semi-remorque tracté (12) selon l'une des revendications précédentes,
**caractérisé en ce que** la tringlerie d'accouplement (36; 136a, 136b) est articulée à son extrémité longitudinale située plus près du plateau rotatif de sellette (18; 118) au point d'accouplement de levier (72; 172a, 172b) du levier de transmission (24; 124) et est relié indirectement ou directement à son autre extrémité longitudinale au levier de pivotement d'accouplement (26; 126), la tringlerie intermédiaire (28; 128) étant en outre articulée à son une extrémité longitudinale au levier de pivotement d'accouplement (26; 126) et étant articulée à son autre extrémité longitudinale au levier de direction (42, 60).

10. Dispositif de direction (10; 110) pour un véhicule semi-remorque tracté (12) selon la revendication 9,
**caractérisé en ce que** la tringlerie d'accouplement (36; 136a, 136b) est articulé directement sur le levier d'entrée (32; 132) et est ainsi indirectement relié au levier de pivotement d'accouplement (26; 126).

11. Véhicule semi-remorque tracté (12) avec un dispositif de direction (10) selon l'une des revendications précédentes.
